# EUROPÄISCHE PATENTSCHRIFT

(11) **EP 0 636 153 B1**
(45) Veröffentlichungstag und Bekanntmachung des Hinweises auf die Patenterteilung: **25.09.1996**
(21) Anmeldenummer: 93908897.7
(22) Anmeldetag: 02.04.1993
(51) Int. Cl.: C08F 20/36, C08F 299/00, C08F 299/02, C09D 4/00

(54) **ADDITIONSPRODUKTE, STRAHLENHÄRTBARE ÜBERZUGSMASSEN AUF BASIS DER ADDITIONSPRODUKTE SOWIE DEREN VERWENDUNG ZUR HOLZBESCHICHTUNG UND ZUR PAPIERBESCHICHTUNG**
ADDITION PRODUCTS, RADIATION CURABLE COATING COMPOUNDS BASED ON THE ADDITION PRODUCTS AND THEIR USE FOR COATING TIMBER AND PAPER
PRODUITS D'ADDITION, MATIERES DE RECOUVREMENT DURCISSABLES PAR IRRADIATION A BASE DE CES PRODUITS D'ADDITION ET LEUR UTILISATION POUR RECOUVRIR LE BOIS ET LE PAPIER

(30) Priorität: 14.04.1992 DE 4212485
(43) Veröffentlichungstag der Anmeldung: 01.02.1995
(73) Patentinhaber: BASF Lacke + Farben AG, 48165 Münster-Hiltrup (DE)
(72) Erfinder: HINTZE-BRÜNING, Horst, Dr., D-48165 Münster (DE); CIBURA, Klaus, Dr., D-48167 Münster (DE); BALTUS, Wolfgang, Dr., D-48161 Münster (DE)
(86) Internationale Anmeldenummer: EP9300824
(87) Internationale Veröffentlichungsnummer: WO9321240

(56) Entgegenhaltungen:
- EP-A- 0 211 978
- EP-A- 0 231 442
- EP-A- 0 316 761
- DE-A- 3 836 370
- US-A- 4 045 416

## Beschreibung

Die vorliegende Erfindung betrifft Additionsprodukte aus
A) Oligomeren mit mindestens zwei Acrylsäureester - und/oder Methacrylsäureestergruppen pro Molekül und
B) Polyaminen.

Weiterhin betrifft die vorliegende Erfindung strahlenhärtbare Überzugsmassen auf Basis der Additionsprodukte und die Verwendung der strahlenhärtbaren Überzugsmassen zur Beschichtung von Holz, Holzwerkstoffen und Papier.

Es ist bekannt, Massen auf der Basis von Acrylsäureestern durch Strahlung, insbesondere UV-Strahlung, zu härten. Hier tritt jedoch das Problem auf, daß bei der Aushärtung von Oberflächen das Vorhandensein von Luft stört.

Aus der DE-PS 26 25 538 sind photopolymerisierbare Überzugsmassen bekannt, die als Reduktionsmittel bzw. Ketten übertragende Verbindungen Amine enthalten. Die Verwendung eines solches freien Amins hat den Nachteil, daß dieses als Weichmacher wirken kann und zu einem unerwünschten Belag auf der Oberfläche und zu Geruchsbelästigungen führt.

Durch Einbau der Aminogruppe in ein Molekül, das noch polymerisationsfähige Gruppen enthält, wird ein bei der Härtung einpolymerisiertes Amin erhalten, das die obengenannten Nachteile nicht aufweist. Eine bekannte Methode des Einbaues ist die Addition von Aminen an doppelbindungsreiche Moleküle, die analog einer Michael-Addition verläuft und die beispielsweise in F. Möller, Houben-Weyl, Bd. 11/1 (1957), S. 277-280, beschrieben ist. Die US-PS 2,759,913 lehrt die Anlagerung von Aminen an aktivierte, olefinisch ungesättigte Verbindungen, wie Acrylate, in äquimolaren Mengen, die zur vollständigen Umsetzung der aktivierten ethylenischen Doppelbindungen führt. Systematische Untersuchungen über die Anlagerung von Aminoalkoholen an Acrylate wurden von N. Ogata und T. Asahara, Bull. Chem. Soc. Jap. 39, Seiten 1486-1490, 1966, durchgeführt.

In der DE-PS 2 346 424 wird die Herstellung von strahlungshärtbaren Massen, ausgehend von Acrylestern mehrwertiger Alkohole und sekundären, aliphatischen monofunktionellen Aminen, beschrieben. Diese Massen weisen den Nachteil verminderter Lagerstabilität auf. Die Anlagerung eines sekundären Amins führt außerdem zu einer Verminderung der Acrylesterfunktionalität des Moleküls und somit auch zu einer Verminderung der Vernetzungsmöglichkeiten für die strahlungsinduzierte Polymerisation.

Aus der EP-A-280 222 sind Additionsprodukte aus Estern der Acryl- oder Methacrylsäure und mehrwertigen Alkoholen mit primären Monoaminen bekannt, wobei das Molverhältnis von Monoamin zu (meth)acrylischer Doppelbindung des Esters 0,05 : 1 bis 0,4 : 1 beträgt.
Die Additionsprodukte gemäß der EP-A-280 222 werden in strahlungshärtbaren Massen eingesetzt, die an der Luft aushärten. Die Lagerstabilität der aus der EP-A-280 222 bekannten Produkte ist jedoch unzureichend. So ist bei Lagerung der Additionsprodukte ein deutlicher Viskositätsanstieg zu verzeichnen. Weiterhin treten Verträglichkeitsprobleme bei Additionsprodukten aus vierwertigen Polyolen mit den primären Monoaminen auf. Derartige Produkte sind trübe bzw. haben ein milchigweißes Aussehen. Nachteilig ist außerdem bei den in der europäischen Anmeldung beschriebenen aminmodifizierten Massen, daß ein relativ hoher Anteil an Monoamin notwendig ist, um in den erhaltenen Additionsprodukten für beispielsweise mit Benzophenon initiierte Systeme ausreichend hohe Stickstoffgehalte zu gewährleisten. Ausreichend hohe Stickstoffgehalte sind nötig, um bei üblicher Strahlendosis für eine in der Praxis ausreichende und vollständig verlaufende Photopolymerisation zu sorgen.

Die EP-A-2457 beschreibt Kunststoffe für geformte Kunststoffteile, wobei die Kunststoffe unter erhöhten Temperaturen aushärten. Bei den Kunststoffen handelt es sich um Michael-Additionsprodukte aus Acrylsäureestermonomeren und Aminen mit einer Amin-Wasserstoff-Funktionalität von mindestens 3. Die Komponenten werden in einem Äquivalentverhältnis von Acrylat zu Aminwasserstoff von 0,5 bis 2,0 umgesetzt.

Aus den US-Patentschriften Nr. 4,547,562 und 4,675,374 sind strahlenhärtbare lösungsmittelfreie Zusammensetzungen bekannt auf Basis von Polyacrylaten und Mono-, Di- oder Polyaminen. Als geeignete Di- und Polyamine werden Spezies mit mehr als einer primären Aminogruppe genannt. Bei Verwendung dieser Polyamine werden hochvernetzte, höhermolekulare und damit höherviskose überzugsmassen erhalten, die ohne Zusatz von Reaktivverdünnern und Lösungsmitteln eine zu hohe Applikationsviskosität aufweisen oder sogar zu festen Produkten führen.

Die US-PS 4,045,416 und US-PS 3,845,056 schließlich betreffen strahlenhärtbare Überzugsmittel auf Basis von Aminacrylaten, welche erhalten werden durch Umsetzung von Polyacrylaten mit Aminen mit mindestens einem Amin-Wasserstoff. Als geeignete Amine werden primäre und sekundäre Monoamine sowie Polyamine genannt. Gemäß den US-Patenten werden als Polyaminkomponenten Polyamine mit mehr als einer primären Aminogruppe, Polyamine mit ausschließlich sekundären Aminogruppen oder Polyamine mit sekundären und tertiären Aminogruppen genannt. Bei Verwendung von Polyaminen mit mehr als einer primären Aminogruppe werden inhomogene Additionsprodukte mit geringer Lagerstabilität erhalten, die Verwendung von Polyaminen mit ausschließlich sekundären Aminogruppen wie beispielsweise Piperazin führt zu inhomogenen Gemischen auf Grund ungenügender Reaktivitäten oder von Unverträglichkeiten. Die Verwendung von Polyaminen mit sekundären und tertiären Aminogruppen führt nur zu einer Verminderung der Acrylsäure- bzw. Methacrylsäureesterfunktionalität des Moleküls.

Die der vorliegenden Erfindung zugrunde liegende Aufgabe bestand daher darin, die zuvor beschriebenen Nachteile zu beseitigen, d.h. strahlenhärtbare Bindemittel zur Verfügung zu stellen, die eine ausreichende Lagerstabilität aufweisen und klar aussehen bzw. homogen sind auch unter Verwendung tetrafunktioneller (Meth)-acrylester als Vorstufe. Die Bindemittel sollten ohne Verwendung externer Synergisten, z.B. Amine, strahlenhärtbar sein.
Die erfindungsgemäßen Bindemittel sollten niedrigviskose Oligomere bei vergleichsweise guter Strahlenhärtbarkeit und vergleichsweise guten resultierenden Filmeigenschaften, insbesondere Härte, darstellen. Die Bindemittel sollten eine niedrige Viskosität aufweisen, so daß auf die Verwendung von Reaktivverdünnern und organischen Lösungsmitteln verzichtet werden kann.

Die der vorliegenden Erfindung zugrunde liegende Aufgabe wird gelöst durch Additionsprodukte aus
A) Oligomeren mit mindestens zwei Acrylsäureester- und/oder Methacrylsäureestergruppen pro Molekül und
B) Polyaminen,
die dadurch gekennzeichnet sind, daß die Polyamine B) Diamine mit einer primären und einer tertiären Aminogruppe sind und das Verhältnis von primären Aminogruppen von B) zu (meth)acrylischen Doppelbindungen von A) 0,01:1 bis 0,2 : 1, bevorzugt 0,03:1 bis 0,1:1, beträgt.

Geeignete Acrylsäure- bzw. Methacrylsäureester (A) sind beispielsweise die Ester der Acrylsäure oder Methacrylsäure mit zweiwertigen aliphatischen Alkoholen, wie Ethylenglykol, Propylenglykol-1,2 und -1,3, Butandiol-1,4, Pentandiol-1,2, Neopentylglykol, Hexandiol-1,6, 2-Methylpentandiol-1,5, 2-Ethylbutandiol-1,4, Dimethylolcyclohexan und Diethylenglykol, mit dreiwertigen Alkoholen, wie Glycerin, Trimethylolethan, Trimethylolpropan und Trimethylolbutan, mit vierwertigen Alkoholen, wie Pentaerythrit, sowie mit höherwertigen Alkoholen, wie Di-(trimethylolpropan), Di-(pentaerythrit) und Sorbitol.

Weiterhin sind cycloaliphatische Alkohole, wie Cyclohexanole und 1,4-Bis-(hydroxymethyl)-cyclohexan, araliphatische Alkohole, wie 1,3-Xylylendiol sowie Phenole wie 2,2-Bis-(4-hydroxyphenyl)-propan (Bisphenol A) geeignet.

Bevorzugt werden als Komponente A) Ester aus Acrylsäure und/oder Methacrylsäure und drei- bis vierwertigen Alkoholen verwendet.

Die oben aufgeführten mehrwertigen Alkohole können vor der Veresterung mit Acrylsäure oder Methacrylsäure durch Alkoxylierung mit z.B. Ethylenoxid oder Propylenoxid in höhermolekulare Etheralkohole überführt worden sein. Daraus resultieren Polyetheracrylate oder Polyethermethacrylate. Derartige Polyether(meth)acrylate werden besonders bevorzugt als Komponente (A) in den erfindungsgemäßen Additionsprodukten verwendet.

Die hydroxylgruppenhaltigen Polyether, die mit Acrylsäure und/oder Methacrylsäure verestert werden, werden durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963) erhalten. Einsetzbar sind auch Polymerisationsprodukte des Tetrahydrofurans oder Butylenoxids.

Als Komponente A) kommen auch Polyesteracrylate und/oder Polyestermethacrylate in Frage. Zur Herstellung der Polyester(meth)acrylate werden als mehrwertige Alkohole hydroxylgruppenhaltige Polyester (Polyesterpolyole) eingesetzt. Diese können durch Veresterung von Dicarbonsäuren mit Diolen und Triolen nach gut bekannten Methoden (vgl. z.B. P.J. Flory, J. Am. Chem. Soc. 58, 1877 (1936) und J. Am. Chem. Soc. 63, 3083 (1953) hergestellt werden.

In manchen Fällen ist es besonders zweckmäßig, ein Epoxyharz mit Acrylsäure oder Methacrylsäure in einer stöchiometrischen Menge, bezogen auf die Epoxyfunktionalität, umzusetzen. Polyglycidylether von Bisphenol A sind in diesem Hinblick besonders geeignet. Sie können vor der Umsetzung noch einige Hydroxylgruppen enthalten. Die Reaktion mit der Acrylsäure oder Methacrylsäure führt zu weiteren Hydroxylgruppen. Derartige mehrwertige Acrylsäureester bzw. Methacrylsäureester werden als Epoxyacrylate bzw. -methacrylate bezeichnet. Durch Addition von hydroxylgruppenhaltigen Acrylestern bzw. Methacrylestern, wie Hydroxyethylacrylat oder Hydroxybutylacrylat an isocyanatgruppenhaltige Mono- bzw. Oligomere werden die Polyurethanacrylate bzw. -methacrylate erhalten, die wie die Epoxy(meth)acrylate als Esterkomponente A) verwendet werden können.

Die Herstellung von Polyetheracrylaten und Polyesteracrylaten ist beispielsweise beschrieben in der DE-A-38 36 370.

Als Diamine mit einer primären und einer tertiären Aminogruppe (Komponente B)) eignen sich N,N-Dialkyl-diaminoalkane, wie z.B. N,N-Dimethyl-1,3-diaminopropan, welches durch katalytische Hydrierung von Dimethylaminopropionitril erhältlich ist. Die Herstellung dieses Polyamins ist beispielsweise beschrieben in Houben Weyl, Bd 11/1, 1957, S. 565, in der EP-A-316 761 oder in P. Lappe, H. Springer und J. Weber, Chem.-Ztg. 111 (4), S. 117-125 (1987).
Weitere geeignete Dialkylaminopropane sind N,N-Diethyl-1,3-diaminopropan, N,N-Di-n-propyl-1,3-diaminopropan, 4-Morpholinopropylamin, 3-(N-Piperidin)propylamin, N,N-Diphenyl-1,3-diaminopropan.

Als Komponente B) der erfindungsgemäßen Additionsprodukte kommen weiterhin in Frage: N,N-Dialkyl-1,2-diaminoethane, wie Dimethylaminoethylamin, Diethylaminoethylamin, N-β-Aminoethylmorpholin (Herstellung siehe z.B. Houben Weyl, Bd. 11/1, 1957, S. 563), N,N-Dialkyl-1,5-diaminopentane, die herstellbar sind durch 1,4-Addition von sekundären Aminen an 1-Cyanbutadien-1,3 unter Bildung der Nitrile und anschließender katalytischer Hydrierung (Herstellung siehe Houben-Weyl, Bd. 11/1, 1957, S. 276). Beispiele für geeignete N,N-Dialkyl-1,5-diaminopentane sind Dimethylaminopentylamin, Diethylaminopentylamin, 4-Morpholinpentylamin.

Besonders gute Ergebnisse werden erzielt, wenn als Aminkomponente B) N,N-Dimethyl-1,3-diaminopropan verwendet wird.

Das Verhältnis von A) zu B) wird so gewählt, daß das Verhältnis von primären Aminogruppen von B) zu den acrylischen bzw. methacrylischen Doppelbindungen von A) 0,01 : 1 bis 0,2 : 1 beträgt. Bevorzugt ist dabei ein Verhältnis von 0,03 : 1 bis 0,1 : 1.

Die erfindungsgemäßen Additionsprodukte sind bei Raumtemperatur flüssig. Sie werden hergestellt, indem an einen Acrylsäureester oder Methacrylsäureester A) oder an ein Gemisch dieser Ester in einer Michael-Reaktion die Diamine B) addiert werden. Die erhaltenen aminmodifizierten Oligomere enthalten noch nichtumgesetzte Acrylester- und/oder Methacrylsäureestergruppen sowie tertiäre Aminogruppen.

Die Additions-Reaktion ist exotherm und wird in flüssiger Phase bei mäßiger Temperatur in Abwesenheit eines Katalysators durchgeführt. Das Diamin (B) wird in entsprechender Menge dem Ester (A) unter Rühren bei Raumtemperatur zugesetzt. Die Temperatur steigt auf etwa 40°C an. Wenn die Reaktion beendet ist, hört die Wärmeentwicklung auf, und die Temperatur sinkt. Durch Erhöhung der Temperatur kann die Reaktion beschleunigt werden, bei 60°C ist sie nach ca. 12 Stunden abgeklungen. Die Viskosität der erhaltenen Mischung ist dann zeitlich konstant.

Wegen der Reproduzierbarkeit sollte die Reaktion möglichst vollständig ablaufen, was bei Reaktionstemperaturen über 50°C erreicht wird.

Die Umsetzung wird im allgemeinen ohne Lösungsmittel durchgeführt, aber es können auch Lösungsmittel angewandt werden, insbesondere um feste Amine B) als Lösung zuzudosieren. Das Lösungsmittel wird dann nach erfolgter Michael-Addition entfernt.

Damit bei der Additionsreaktion keine unerwünschte Polymerisation stattfindet, werden dem Reaktionsgemisch im allgemeinen Polymerisationsinhibitoren zugesetzt. Zu den geeigneten Polymerisationsinhibitoren gehören bekannte Produkte, wie substituierte Phenole, wie 2,6-Di-tert.-butyl-p-kresol, Hydrochinone, wie Methylhydrochinone, und Thioether, wie Thiodiglykol oder Phenothiazin.

Die vorliegende Erfindung betrifft daher auch ein Verfahren zur Herstellung des erfindungsgemäßen Additionsprodukte, das dadurch gekennzeichnet ist, daß die Esterkomponente A) und die Diaminkomponente B) ggf. in organischem Lösungsmittel unter Verwendung von Polymerisationsinhibitoren miteinander umgesetzt werden.

Die erfindungsgemäßen aminmodifizierten Additionsprodukte aus den Komponenten A) und B) werden als filmbildende Komponenten in strahlenhärtbaren Überzugsmassen verwendet. Diese strahlenhärtbaren überzugsmittel können neben den erfindungsgemäßen aminomodifizierten Oligomeren je nach Viskosität der Ester weitere, für den Einsatz in strahlenhärtbaren Überzugsmitteln bekannte copolymerisierbare Verbindungen enthalten z.B. (Meth)-Acrylsäureester, insbesondere Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Octadecenyl(meth)acrylat sowie die entsprechenden Ester der Malein-, Fumar-, Tetrahydrophthal-, Croton-, Isocroton-, Vinylessig- und Itaconsäure. Bevorzugt eingesetzt werden Monomere mit mehr als 1 Doppelbindung pro Molekül, z.B. Ethylenglykoldiacrylat, Diethylenglykoldiacrylat, Propylenglykoldiacrylat, Trimethylenglykoldiacrylat, Neopentylglykoldiacrylat, 1,3-Butylenglykoldiacrylat, 1,4-Butylenglykoldiacrylat, 1,6-Hexamethylenglykoldiacrylat, 1,10-Decamethylenglykoldiacrylat, Trimethylolpropantriacrylat, Pentaerythrittetraacrylat und Pentaerythrittriacrylat sowie die entsprechenden Methacrylate. Ganz besonders bevorzugt eingesetzt werden Trimethylolpropantriacrylat und Acrylsäureester von propoxiliertem Trimethylolpropan.

Der Zusatz dieser monomeren, copolymerisierbaren Verbindungen (oft auch Reaktivverdünner genannt) ist aber im allgemeinen nicht erforderlich, da die erfindungsgemäßen aminmodifizierten Ester niedrigviskos sind.

Je nach Viskosität der erfindungsgemäßen Additionsprodukte können die strahlenhärtbaren Überzugsmassen Wasser enthalten, i.a. ist der Zusatz von Wasser aufgrund der niedrigen Viskosität der filmbildenden Komponenten nicht erforderlich. Der Vorteil der beschriebenen Additionsprodukte ist auch insbesondere darin zu sehen, daß diese in Wasser dispergierbar sind, d.h. auf die Verwendung von organischen Lösungsmitteln kann vollständig verzichtet werden.
Die in den strahlenhärtbaren Überzugsmitteln enthaltenen Additionsprodukte aus A) und B) sind wasserlöslich bzw. wasserdispergierbar durch die in ihren enthaltenen tertiären Aminogruppen. Diese können durch zumindest teilweise Umsetzung mit Säuren in die geladenen Gruppen überführt werden. Zur Neutralisation der basischen Gruppen geeignete Säuren sind beispielsweise Milchsäure, Essigsäure, Ameisensäure und Phosphorsäure.

Die strahlenhärtbaren Überzugsmassen enthalten außerdem üblicherweise in strahlenhärtbaren Überzugsmitteln eingesetzte Photoinitiatoren, beispielsweise Benzophenone, Benzoine oder Benzoinether. Auf die Verwendung von Synergisten kann verzichtet werden, da die in den Überzugsmitteln enthaltenen Ester aminmodifiziert sind und damit eine synergistische Wirkung aufweisen.

Die erfindungsgemäßen strahlenhärtbaren Zusammensetzungen können neben den aminmodifizierten Umsetzungsprodukten aus den Estern A) und den Diaminen B) noch weitere photopolymerisierbare Bindemittel, welche ebenfalls aminmodifiziert sein können, enthalten. Als derartige weitere aminmodifizierte Bindemittel kommen z.B. die aus der EP-A-280 222 und die aus den US-Patentschriften Nr. 4,045,416, 4,547,562 und 4,675,374 bekannten strahlenhärtbaren Bindemittel in Frage.
Als nicht-aminmodifizierte weitere Bindemittel kommen die als Beispiel für die Komponente A) zuvor beschriebenen Polyetheracrylate, Polyethermethacrylate, Polyesteracrylate, Polyestermethacrylate, Urethanacrylate, Urethanmethacrylate, Epoxidacrylate und Epoxidmethacrylate in Frage.

Die erfindungsgemäßen strahlenhärtbaren Überzugsmassen enthalten ggf. übliche Hilfs- und Zusatzstoffe, z.B. Extender, wie Talkum, Schwerspat, Aluminiumsilikate, Dolomit, Entschäumer, Verlaufsmittel und filmbildende Hilfsmittel, z.B. Cellulose-Derivate, sowie Mattierungsmittel in üblichen Mengen.

Die Überzugsmittel können durch Spritzen, Walzen, Fluten, Tauchen, Rakeln, Streichen, Gießen oder durch Vakumat-Applikation auf das Substrat, vorzugsweise auf Holz, auf Holzwerkstoffe oder auf Papier, aufgebracht werden.

Die Härtung der Lackfilme erfolgt direkt nach dem Auftragen oder nach dem Verdunsten von anwesendem Wasser mittels UV- oder Elektronenstrahlen. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA-Technology, Academic Press, London, United Kingdom 1984, Seiten 79-111) und bedürfen keiner weiteren Beschreibung.

Die erfindungsgemäßen Überzugsmittel eignen sich auch als Druckfarben.

Die erfindungsgemäßen strahlenhärtbaren Überzugsmittel bzw. die aminmodifizierten Ester aus den Komponenten A) und B) weisen eine ausgezeichnete Lagerstabilität auf. Die aminmodifizierten Ester sind homogen, haben ein klares Aussehen, eine gute Strahlenhärtbarkeit, und sie führen nach der Strahlenhärtung zu Filmen mit ausgezeichneten Eigenschaften. Bei vergleichbarem Stickstoffgehalt und vergleichbarer Reaktivität gegenüber Strahlung sind die erfindungsgemäßen aminmodifizierten Ester niedrigviskoser als die aminmodifizierter Ester gemäß der EP-A-280 222. Die erhaltenen Filme zeichnen sich durch eine ausgezeichnete Transparenz aus.

Nachfolgend wird die Erfindung anhand von Ausführungsbeispielen näher erläutert. Teile bedeuten Gewichtsteile, sofern nichts anderes angegeben wird:

### Beispiele

Zur Herstellung der Esterkomponente A) werden Polyetheracrylate hergestellt aus mit Propylenoxid alkoxiliertem Trimethylolpropan und Acrylsäure und aus mit Ethylenoxid alkoxiliertem Pentaerythrit mit Acrylsäure (Polyetheracrylat-Vorstufe). Die Herstellung erfolgt in einem Reaktionskessel mit einer Ansatzgröße von 3 bis 10 kg, der mit Rührer, Luftzufuhr, Temperaturmeßstab und ölmantelheizung ausgestattet ist. Die Veresterung erfolgt bei 130°C unter saurer Katalyse (0,5 % Methansulfonsäure, bezogen auf die Edukte) mit 2 % Cyclohexan als Schleppmittel und Hydrochinon und unterphosphoriger Säure als Stabilisatoren (0,2 Gew.- % Hydrochinon und 0,05 Gew.-% unterphosphorige Säure, bezogen auf die Edukte) bis zu einem OH-Gruppen-Umsatz von mindestens 85 %. Danach werden im Vakuum restliche Acrylsäure und das restliche Schleppmittel entfernt, bis die Säurezahl einen Wert von ≤ 4 mg KOH/g erreicht hat und der Festkörper (1 h, 130°C) mindestens 98 % beträgt.
Die Adduktbildung mit der Aminkomponente B) wird bei 60°C in Stickstoffatmosphäre unter Verwendung von 0,1 % 2,6-Di-tert.-butyl-p-kresol als Stabilisator (Polymerisationsinhibitor) durchgeführt, bis eine über 2 Stunden konstante Viskosität erreicht wird.
Dabei wird die Aminkomponente B) zur vorgelegten Esterkomponente A) über einen Zeitraum von 0,5 bis 1,0 h zudosiert. Bei Verwendung von Piperazin wird dieses als Pulver zugegeben, welches sich langsam auflöst. (Vergleichsbeispiele V1-2 und V2-3).

In der nachfolgenden Tabelle sind die Zusammensetzung sowie die Eigenschaften erfindungsgemäßer Additionsprodukte aus A) und B) (El bis E3) sowie bekannter Additionsprodukte aus A) und primären und sekundären Monoaminen und disekundären Diaminen als Vergleich (V1 - V3) aufgeführt.

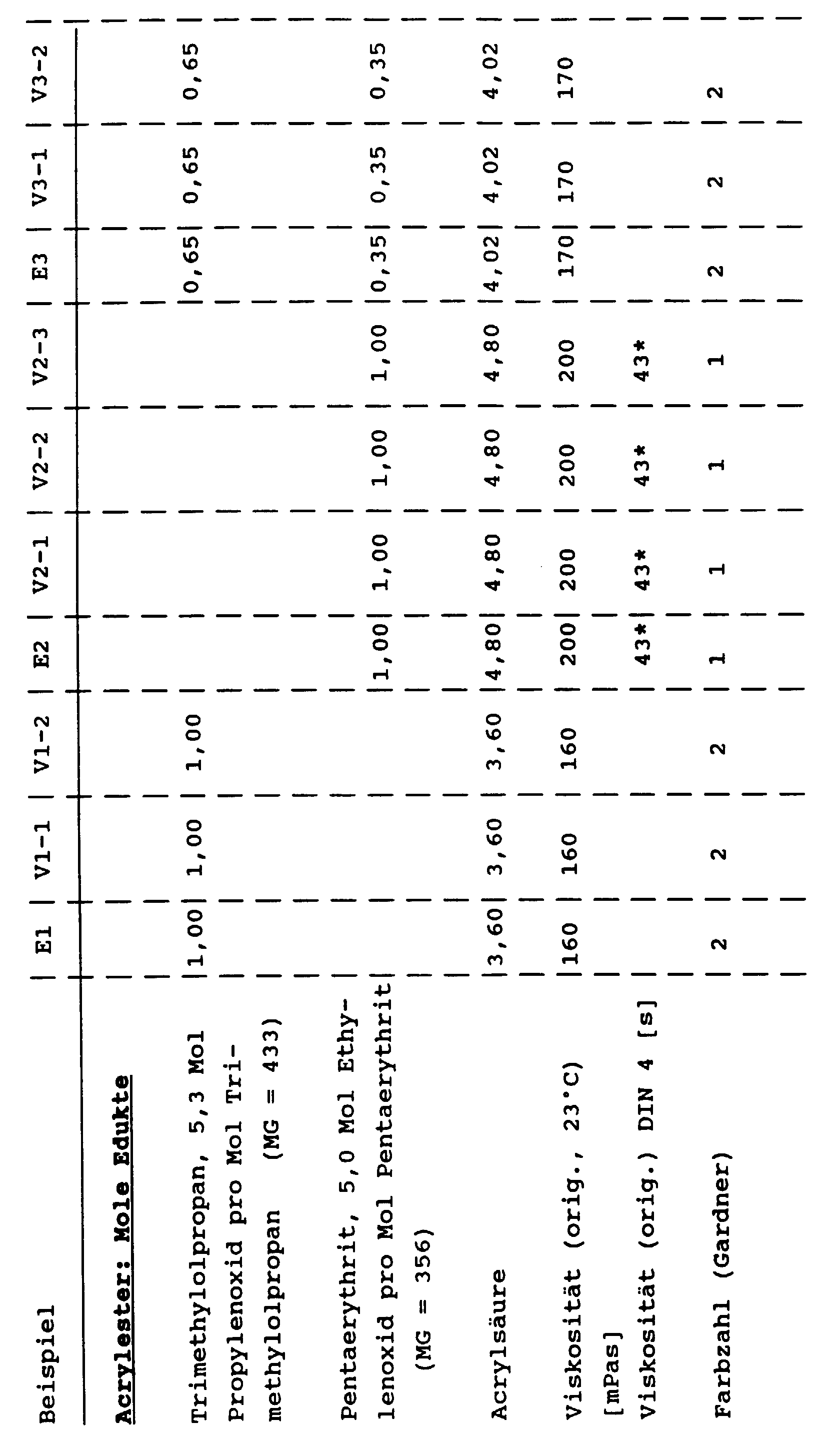

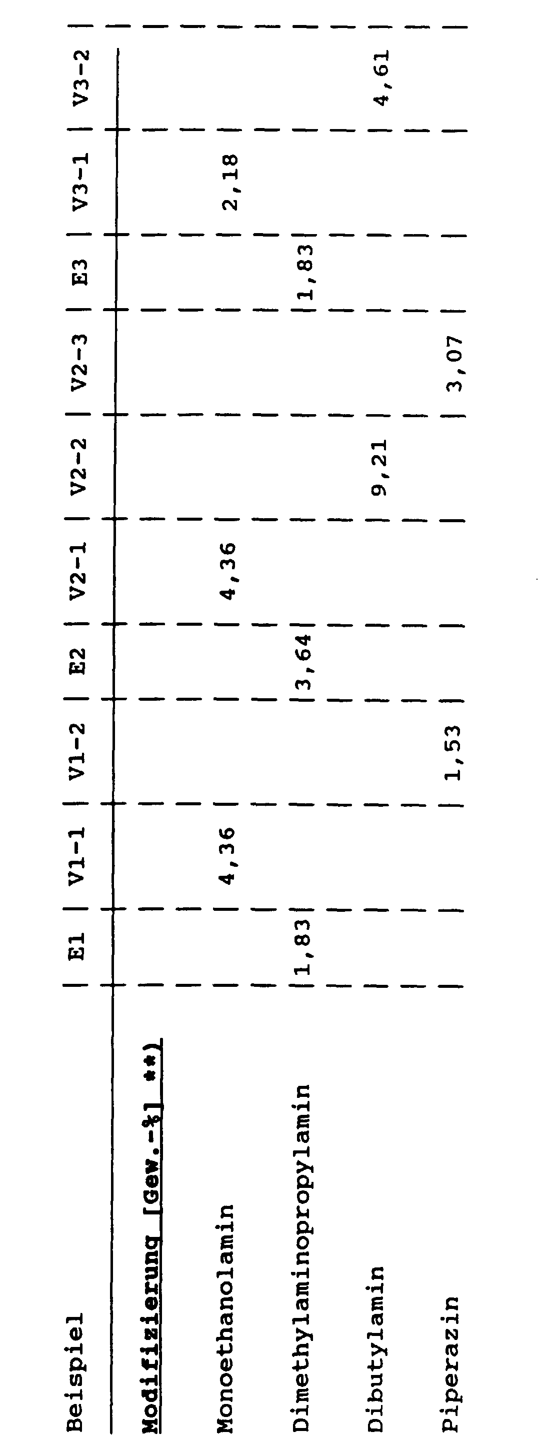

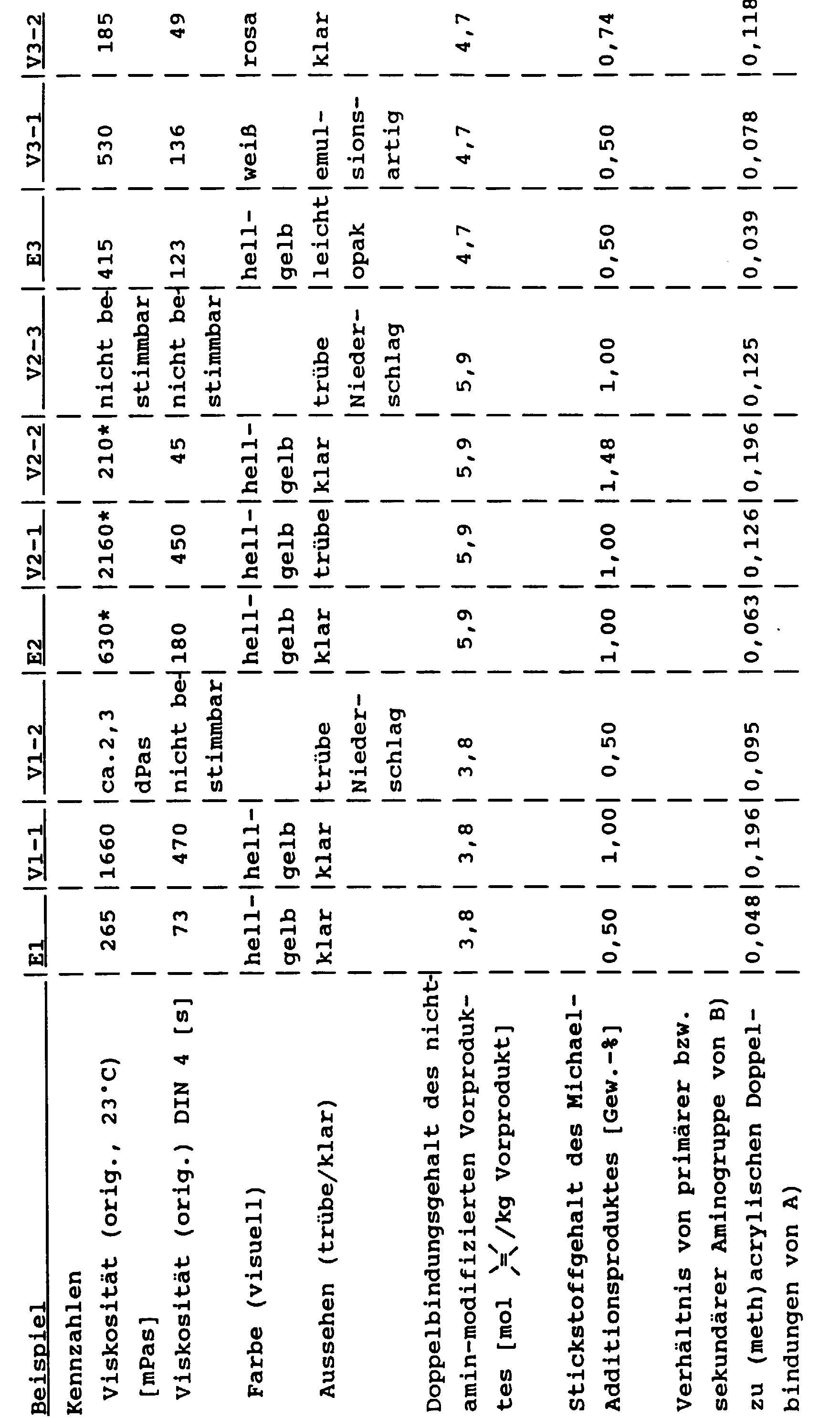

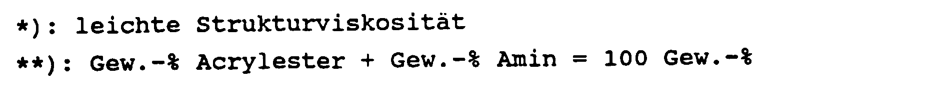

### Prüfung der Additionsprodukte

### 1. Pendeldämpfung (König, [s]) der Beispiele und Vergleichsbeispiele als Funktion der relativen Strahlendosis

Aus 91,6 Teilen der Additionsprodukte bzw. der Vorprodukte, 3,4 Teilen eines üblichen Mattierungsmittels und 5 Teilen Benzophenon wird ein 40 µm starker (Naßfilmstärke) Glasaufzug hergestellt. Die Glasplatten werden mit variablen Geschwindigkeiten von 10 - 40 m/min (relative Dosis = 1,0 =̂ Vorschub von 10 m/min; relative Dosis = 1,0 =̂ Vorschub von 4 x 40 m/min; relative Dosis = 4 =̂ 4 x 10 m/min und relative Dosis = 0,25 =̂ 1 x 40 m/min) unter einer Quecksilbermitteldrucklampe (80 Watt/cm, Abstand: 20 cm) gehärtet. Die Pendelhärten der klebfreien Filme werden nach König bestimmt.

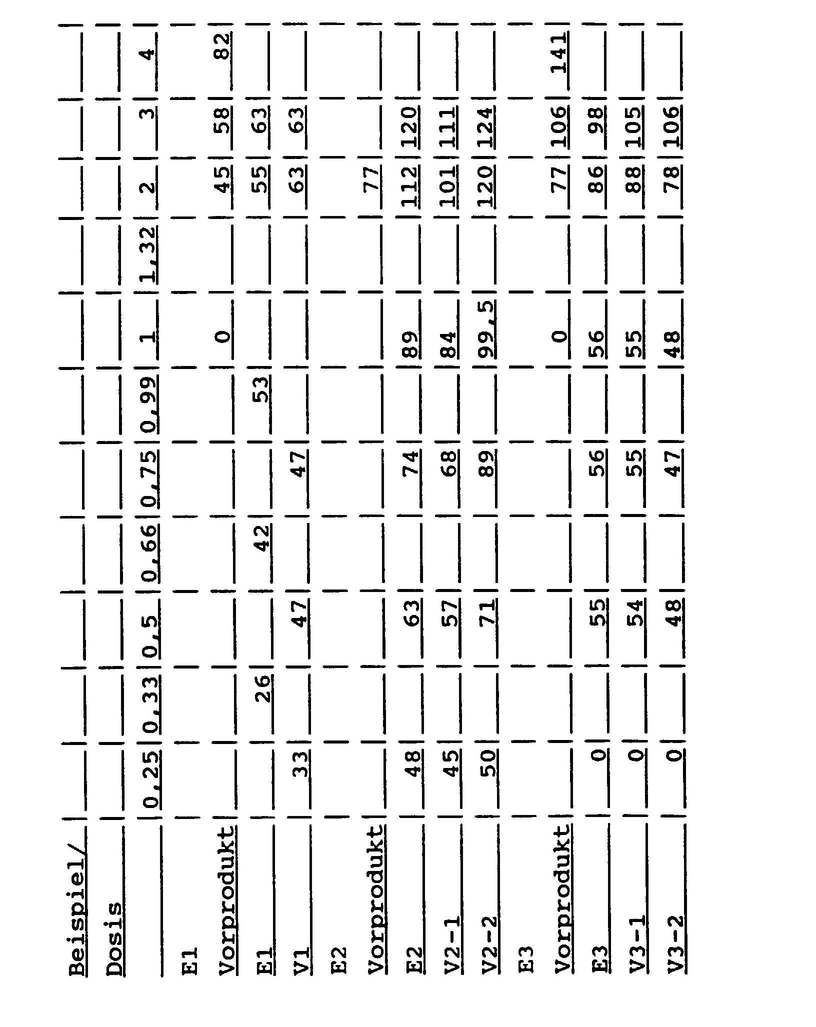

### 2. Lagerstabilität

Es wird die Lagerstabilität der Additionsprodukte bei 50°C bestimmt.

Ofenproben (50°C): Viskositätsverlauf (orig.) DIN 4 [s]

| | 5 Tage | 10 Tage | 30 Tage | 120 Tage | Bemerkung |
|---|---|---|---|---|---|
| E1 | 73 | 74 | 73 | 75 | |
| V1 | 470 | 470 | 475 | 570 | |
| E3 | 123 | 123 | 125 | | |
| V3-1 | 136 | 150 | 170 | | 20 Tage:2 Phasen |
| V3-2 | 49 | 52 | 54 | | |

## Patentansprüche

1. Additionsprodukte aus
A) Oligomeren mit mindestens zwei Acrylsäureester- und/oder Methacrylsäureestergruppen pro Molekül und
B) Polyaminen,
dadurch gekennzeichnet, daß die Polyamine Diamine mit einer primären und einer tertiären Aminogruppe sind und das Verhältnis von primären Aminogruppen von B) zu (meth)acrylischen Doppelbindungen von A) 0,01:1 bis 0,2:1, bevorzugt 0,03:1 bis 0,1:1, beträgt.

2. Additionsprodukte nach Anspruch 1, dadurch gekennzeichnet, daß als Komponente A) Ester aus Acrylsäure und/oder Methacrylsäure und drei- und/oder vierwertigen Alkoholen verwendet werden.

3. Additionsprodukte nach Anspruch 1 oder 2, dadurch gekennzeichnet, daß als Komponente A) Polyetheracrylate und/oder Polyethermethacrylate verwendet werden.

4. Additionsprodukte nach Anspruch 1 bis 3, dadurch gekennzeichnet, daß als Komponente B) N,N-Dimethyl-1,3-diaminopropan verwendet wird.

5. Verfahren zur Herstellung der Additionsprodukte nach einem oder nach mehreren der Ansprüche 1 bis 4, dadurch gekennzeichnet, daß die Ester A) und die Polyamine B) ggf. in organischem Lösungsmittel unter Verwendung von Polymerisationsinhibitoren miteinander umgesetzt werden.

6. Strahlenhärtbare Überzugsmassen, enthaltend die Additionsprodukte gemäß Anspruch 1 bis 4 sowie Photoinitiatoren, ggf. ethylenisch ungesättigte, photopolymerisierbare Verbindungen sowie ggf. weitere strahlenhärtbare Bindemittel, ggf. weitere übliche Hilfs- und Zusatzstoffe sowie ggf. Wasser und ggf. Neutralisationsmittel.

7. Verwendung der strahlenhärtbaren Überzugsmassen gemäß Anspruch 6 zur Beschichtung von Holz, Holzwerkstoffen und Papier.

## Claims

1. Addition products of
A) oligomers having at least two acrylic ester and/or methacrylic ester groups per molecule and
B) polyamines,
characterized in that the polyamines are diamines having a primary and a tertiary amino group and the ratio of primary amino groups of B) to (meth)acrylic double bonds of A) is 0.01:1 to 0.2:1, preferably 0.03:1 to 0.1:1.

2. Addition products according to Claim 1, characterized in that esters of acrylic acid and/or methacrylic acid and tri- and/or tetrahydric alcohols are used as component A).

3. Addition products according to Claim 1 or 2, characterized in that polyether acrylates and/or polyether methacrylates are used as component A).

4. Addition products according to Claim 1 to 3, characterized in that N,N-dimethyl-1,3-diaminopropane is used as component B).

5. Process for the preparation of the addition products according to one or more of Claims 1 to 4, characterized in that esters A) and polyamines B) are reacted with one another, if appropriate in an organic solvent, with the use of polymerization inhibitors.

6. Radiation-curable surface coating compositions, which contain the addition products according to Claim 1 to 4 and photoinitiators and, if desired, ethylenically unsaturated, photopolymerizable compounds and, if desired, further radiation-curable binders and, if desired, further customary auxiliaries and additives and, if desired, water and, if desired, neutralizing agents.

7. Use of the radiation-curable surface coating compositions according to Claim 6 for the coating of wood, woodbase materials and paper.

## Revendications

1. Produits d'addition
(A) d'oligomères avec au moins deux groupements d'esters d'acide acrylique et/ou d'acide méthacrylique par molécule et
(B) de polyamines,
caractérisés en ce que les polyamines sont des diamines ayant un groupement amino primaire et un groupement amino tertiaire, et en ce que le rapport des groupements amino primaires de B) aux liaisons doubles (méth)acryliques de A) est de 0,01:1 à 0,2:1, de préférence de 0,03:1 à 0,1:1.

2. Produits d'addition selon la revendication 1, caractérisés en ce que l'on utilise en tant que composant A) des esters de l'acide acrylique et/ou de l'acide méthacrylique et des alcools trihydriques et/ou tétrahydriques.

3. Produits d'addition selon la revendication 1 ou 2, caractérisés en ce que l'on utilise en tant que composant A) des acrylates de polyéther et/ou des méthacrylates de polyéther.

4. Produits d'addition selon la revendication 1 à 3, caractérisés en ce que l'on utilise en tant que composant B) du N,N-diméthyl-1,3-diaminopropane.

5. Procédé pour la fabrication des produits d'addition selon une ou plusieurs des revendications 1 à 4, caractérisés en ce que l'on fait réagir les esters A) et les polyamines B) les uns avec les autres, le cas échéant, dans des solvants organiques en utilisant des agents inhibiteurs de polymérisation.

6. Masses de recouvrement durcissables par irradiation, contenant les produits d'addition selon les revendications 1 à 4 ainsi que des agents photoinitiateurs, le cas échéant des composés photopolymérisables, éthyléniquement insaturés ainsi que, le cas échéant, d'autres liants durcissables par irradiation, le cas échéant, d'autres additifs et adjuvants usuels ainsi que, le cas échéant, de l'eau et, le cas échéant, des agents de neutralisation.

7. Utilisation des masses de recouvrement durcissables par irradiation selon la revendication 6, pour recouvrir le bois, les matériaux ligneux et le papier.
